# EUROPEAN PATENT SPECIFICATION

(11) **EP 3 247 958 B1**
(45) Date of publication and mention of the grant of the patent: **07.04.2021**
(21) Application number: 16704727.3
(22) Date of filing: 19.01.2016
(51) Int. Cl.: F27D 17/00, F27D 19/00

(54) **MODEL-BASED CONTROLS FOR A FURNACE AND METHOD FOR CONTROLLING THE FURNACE**
MODELLBASIERTE STEUERUNGEN FÜR EINEN OFEN UND VERFAHREN ZUR STEUERUNG DES OFENS
COMMANDE BASÉE SUR UN MODÈLE POUR UN FOUR ET PROCÉDÉ PERMETTANT DE COMMANDER LE FOUR

(30) Priority: 20.01.2015 US 201514600804
(43) Date of publication of application: 29.11.2017
(73) Proprietor: General Electric Technology GmbH, 5400 Baden (CH)
(72) Inventor: LOU, Xinsheng, West Hartford, Connecticut 06117 (US); JOSHI, Abhinaya, Glastonbury, Connecticut 06033 (US); YANG, Shizhong, West Hartford, Connecticut 06117 (US); WANG, Chuan, Simsbury, Connecticut 06070 (US); NEUSCHAEFER, Carl H., Enfield, Connecticut 06082 (US); TANCA, Michael Chris, Tariffville, Connecticut 06081 (US)
(74) Representative: BRP Renaud & Partner mbB Rechtsanwälte Patentanwälte Steuerberater
(86) International application number: PCT/US2016/013837
(87) International publication number: WO 2016/118470

(56) References cited:
- WO-A1-03/105997
- US-A- 5 543 116
- US-A- 5 853 683
- US-A1- 2006 052 902
- US-A1- 2013 156 671
- US-A1- 2014 137 778
- US-B1- 6 403 046
- "FUZZY-BASED CONTROLLER IMPROVES DENOX PERFORMANCE IN POWER PLANTS", ABB REVIEW, ABB ASEA BROWN BOVERI, ZURICH, CH, no. 9, 1 January 1993 (1993-01-01), pages 13-20, XP000416290, ISSN: 1013-3119

## Description

### TECHNICAL FIELD

This disclosure relates to model-based controls for a furnace and to methods for controlling the furnace. In particular, this disclosure relates to the use of a model based controller for controlling a pulverized coal (PC) fired furnace that uses Selective Non-Catalytic Reduction (SNCR) for nitrogen oxide (NOx) containing gases. The furnace may be part of a boiler.

### BACKGROUND

Selective Non-Catalytic Reduction (SNCR) processes represent one manner of decreasing NOx content in flue gases from a combustion process by using an appropriate reduction agent in a non-catalytic environment. As no catalyst is needed for the SNCR process compared with a selective catalytic reduction (SCR) process, reaction temperatures for the SNCR process have to be maintained within desirable limits. The SNCR process involves injecting either ammonia or urea into the firebox of the boiler at a location where the flue gas is between 1,400 and 2,000°F (760 and 1,090°C) to react with the nitrogen oxides formed in the combustion process.

At temperatures below 760°C, the NOx and the ammonia do not react. Ammonia that has not reacted is called ammonia slip and is undesirable, as the ammonia can react with other combustion species, such as sulfur trioxide (SO₃), to form ammonium salts. Unreacted ammonia can be discharged at the stack - this is undesirable. At high temperatures (> 1090°C), the ammonia starts to decompose into NOx and H₂O. In this case, additional NOx is created from the ammonia instead of facilitating the removal of existing NOx from the flue gas stream. A further complication is mixing. In general, more NOx will form in the center and less near the walls, as the walls are cooler than the center. Thus, more ammonia must find its way to the center and less near the walls, otherwise NOx in the center meets insufficient ammonia for reduction and excess ammonia near the walls slips through.

The SNCR process is generally carried out in the furnace hot flue gas path, mostly in the radiation passes of the boiler. The SNCR performance is influenced by furnace load, coal feeding and windbox operation, which can change flue gas properties, e.g., temperature, excess oxygen, NOx content, and the like. It is not only desirable to control NOx emission to below the regulated value it is also desirable to reduce ammonia slip, because ammonia slip is also regulated out of the SNCR and at the plant stack. In addition, ammonia slip is a waste product of the NOx reducing agent (urea in this case) that increases operating cost. Clearly, a multivariable control optimization solution is desirable to better control the boiler flue gas outputs which are input to the SNCR and the -SNCR process itself to maintain NOx emission and ammonia slip below regulated or more stringent commercial limits, while minimizing the overall boiler/SNCR system operating costs.

Though in theory selective non-catalytic reduction can achieve the same efficiency of about 90% as selective catalytic reduction (SCR), these practical constraints of temperature, time, and mixing often lead to worse results in practice. However, selective non-catalytic reduction has an economical advantage over selective catalytic reduction, as the cost of the catalyst is absent.

In order to maximize the advantages of SNCR technology while at the same time minimizing its disadvantages, it is desireable to use a multivariable control optimization solution to better control the furnace flue gas outputs which are input to the SNCR and the SNCR process itself to maintain NOx emission and ammonia slip below regulated limits, while minimizing the overall boiler/SNCR system operating costs.

WO 03/105997 A1 discloses a method and a device for controlling a flue gas denitrification plant. The plant is equipped with a catalyst which is arranged in a flue gas duct, which conducts the flue gas from a furnace via the catalyst to another place and with a container filled with ammonia. The ammonia is conducted to the catalyst via a control valve. A first computer calculates the deactivation of the catalyst on the basis of values measured. A second computer is used to determine the parametric behavioral changes of the catalyst and to communicate with a third computer in which a model of the catalyst is stored and adapted to the parametric behavioral changes. The third computer is linked with a PID controller which is in a feedback loop with the control valve.

US 6 403 046 B1 and US 2013/156671 A1 each describe boilers comprising two NOx reduction systems, one of which configured as SCR system and positioned downstream a boiler and the other configured as SNCR system and positioned upstream the boiler. The system of US 2013/156671 A1 further comprises a third NOx reduction system which is positioned downstream the boiler and upstream the SCR system.

### SUMMARY

A control system for NOx reduction in a power plant according to claim 1 and a method of reducing NOx in a power plant according to claim 14 define the subject matter for which patent protection is sought.

### BRIEF DESCRIPTION OF THE FIGURES

Figure 1 is a schematic depiction of an exemplary system that uses one or more model predictive controllers (MPCs) to supervise a plurality of proportional integral derivative controllers (PIDs) to maintain the operability of the SNCR process in a furnace that contacts a flue gas treatment system;
Figure 2 is a detailed schematic depiction of the exemplary system of the Figure 1;
Figure 3 is a detailed schematic depiction of the exemplary system of the Figure 1 where the PIDs are replaced by adaptive controllers;
Figure 4 depicts one mode of adaptive control;
Figure 5 depicts another mode of adaptive control;
Figure 6 is a schematic depiction of how an adaptive mechanism is used to provide a performance evaluation of a model predictive controller based on instant measurements;
Figure 7 depicts the basic structure of model based fault detection;
Figure 8 shows the logic behind particle swarm optimization;
Figure 9 is a depiction of how the disclosed control system is used in a furnace for NOx abatement;
Figure 10(A) depicts conventional NOx spray profiles for furnaces fitted with nozzles in the side walls;
Figure 10(B) depicts NOx spray profiles for furnaces with nozzles in the roof of the furnace or alternatively along a center line of the length of the furnace;
Figure 11 depicts the furnace having nozzles in the side wall as well as along the center line of the length of the furnace;
Figure 12(A) depicts the hybrid spray pattern in the furnace when viewed from the furnace roof; and
Figure 12(B) depicts the NOx reducing agent supply system and the control system that is used to reduce NOx emissions in the furnace.

### DETAILED DESCRIPTION

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

Unless otherwise defined, all terms (including technical and scientific terms) used herein have the same meaning as commonly understood by one of ordinary skill in the art to which this invention belongs.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Disclosed herein is a control system and a method of controlling the operations of a furnace in a power plant that uses a selective non catalytic reduction process (SCNR) downstream of the furnace so that flue gases produced in the furnace which are the inputs to the SNCR process are controlled. The furnace may be part of a boiler. In one exemplary embodiment, the furnace is part of a pulverized coal (PC) fired boiler. The control system involves using a multivariable control optimization solution to maintain NOx emission and ammonia slip below regulated or commercial limits, while minimizing the overall boiler/SNCR system operating costs.

Current umbrella SNCR process control systems for a fossil fuel fired boiler unit includes a set of regulatory PID controllers to maintain the operability of the SNCR process. In this invention, a model based supervisory controller (e.g. a model predictive controller (MPC)) is used to optimize the SNCR operation performance. In view of the fact that the furnace fuel/air operation and SNCR are interrelated, it is desirable to approach the control optimization problem from an integrated furnace SNCR point of view so that an optimal control solution for a combined furnace-SNCR system is obtained.

The control system therefore includes a model-based optimizing process control design for the furnace as well as the SNCR process and uses auto-tuning (adaptive tuning) amongst other improved control mechanisms to continue to improve controls from data generated during the operation of the process. Adaptive controls and fault tolerant controls are generally treated as complementary control designs. This disclosure integrates adaptive control with fault tolerant control and controls auto-tuning using optimization methods such as particle swarm optimization (PSO) algorithms to enhance the MPC designs for enhanced system control quality.

The control system detailed herein is advantageous because the use of adaptive control mechanisms in conjunction with a fault tolerance approach facilitates and enhances the overall control performance and reliability of integrated controls of the furnace-SNCR portion of the power plant. Current SNCR relies almost exclusively on the use of basic PID controllers to control NOx that is discharged from the power plant. Currently the PID and standard MPC tuning rely on a manual tuning method. Auto-tuning with an advanced particle swarm optimization algorithm add significant tuning effectiveness with less effort. Integrated controls for the furnace and the SNCR are not in use in the current state of the art.

In one embodiment, the control system includes a model predictive control (MPC) layer to supervise other controllers such as proportional integral derivative (PID) controllers. The MPC is referred to as the MPC supervisor, since it supervises and controls the information provided to the power plant by the PID controllers. In another embodiment, some or all of the PID controllers are replaced by adaptive controllers that are capable of modifying system behavior based on dynamic process changes and the character of these changes during plant operation. In short, the MPC supervisory layer and the PID and/or the adaptive control layer are in a master-slave relationship with the PID and/or the adaptive control layer being subordinated to the MPC layer.

In one embodiment, the MPC supervisory layer uses fault tolerance logic in order to provide supervisory control over the PID and/or adaptive control layers. Fault tolerance is the property that enables the control system (and hence the power plant) to continue operating properly in the event of the failure of (or one or more faults within) some of its components. In one embodiment, if the operating quality decreases at all, the decrease is proportional to the severity of the failure, as compared to a conventionally designed system in which even a small failure can cause total breakdown.

In another embodiment, the control system uses optimization methods such as particle swarm optimization (PSO) to effect automatic tuning (referred to herein as "auto tuning") to effect enhanced supervisory control of the PID and/or adaptive control layers by the MPC layers. In this embodiment, which includes optimizing all control layers, a multi-objective particle swarm optimization (MOPSO) algorithm is proposed to fine-tune the baseline MPC parameters.

In another embodiment, the control system detailed herein is used to control the delivery of a NOx reducing agent delivered to the furnace via an inlet port (or a system of inlet ports) located in the upper portions of the furnace. The control system facilitates control over the height of the nozzles, the amount or flow rate of the NOx reducing agent, the amount or flow rate of the water and the concentration of the NOx reducing agent delivered to the furnace. This control ensures that NOx released to the atmosphere or ammonia slip that may occur from the power plant is within regulatory limits irrespective of the operating conditions of the plant.

SNCR technology is attractive due to its lower capital and operating cost, design simplicity, catalyst-free system, ease of installation in existing plants, applicability to all types of stationary-fired equipment, and the fact that it is largely unaffected by fly ash and usability with other NOx emission control technology. The SNCR process is operated in the downstream sections of the furnace (e.g., in downstream sections of the boiler combustion process). The operation of the furnace combustion system includes oxygen controls and air staging, which will impact the distributions of flue gas flows, temperatures and molar fractions of the relative species and radicals in the SNCR reaction zones. Thus, it is desirable to consider not only optimization of the umbrella SNCR process by itself, but to apply an integrated optimization of the both furnace combustion and SNCR processes using a multivariable controls approach.

In one embodiment, the control system comprises a MPC that supervises a plurality of proportional integral derivative controllers (PIDs) to maintain the operability of the SNCR process.

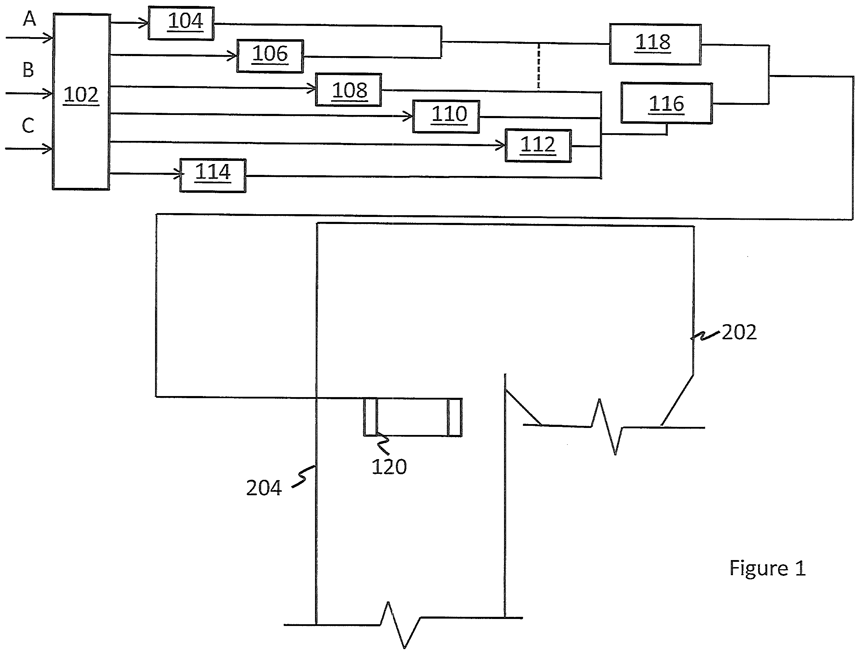

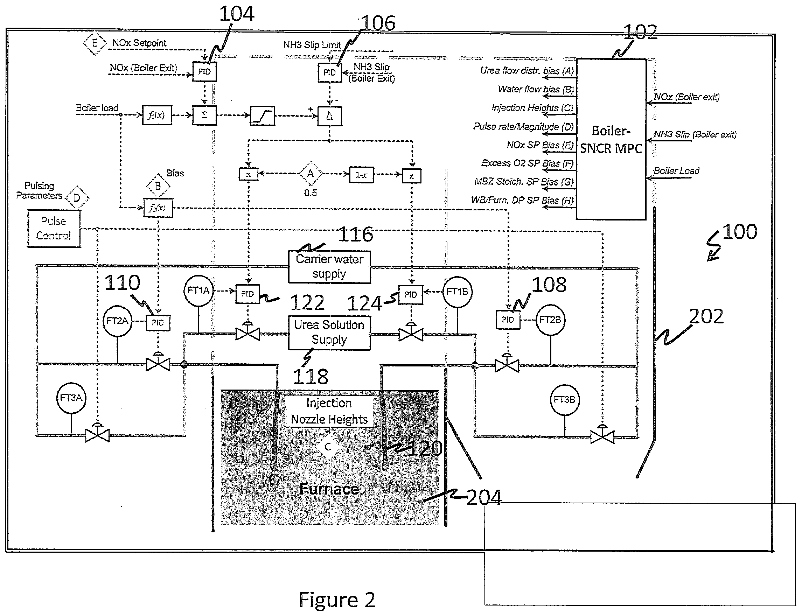

Figures 1 and 2 are schematic depiction of an exemplary system 100 that uses one or more MPCs (MPCs) 102 to supervise a plurality of proportional integral derivative controllers (PIDs) 104, 106, 108, 110, 112, 114, and so on, to maintain the operability of the SNCR process in a furnace 204 that contacts a flue gas treatment system 202. Figure 1 is a simplified schematic of the system 100 that is depicted in detail in the Figure 2. The overall integrated furnace-SNCR control optimization design is depicted in Figure 2.

The flue gas treatment system 202 lies downstream of the furnace 204. The furnace 204 is in fluid communication with a turbine (not shown) that is used to drive a generator (also not shown) to produce energy. In an embodiment, the furnace 204 may be part of a pulverized coal fired boiler (a PC boiler). The demands of the turbine determine the load on the furnace, which is compensated for in a variety of different ways, one of which is to control the amount of fuel supplied to the furnace.

Disposed in the furnace 204 is an inlet port 120 (also commonly referred to as a nozzle) that introduces the NOx reducing agent (e.g. ammonia or urea) into the furnace. The PIDs 104, 106, 108, 110, 112, 114, are in electrical communication with the MPC 102 and also with a water supply tank 116 and a NOx reducing agent supply tank 118. The water supply tank 116 and the NOx reducing agent supply tank 118 are in fluid communication with the furnace 204 and lie upstream of it. The water supply tank 116 provides water while the NOx reducing agent supply tank 118 provides the NOx reducing agent which are combined in desired ratios and introduced into the furnace 204 through the nozzle 120 to reduce the NOx present in the flue gas stream to the desired value. In an embodiment, no other catalyst(s) are used in the NOx reduction process. The desired value of NOx released into the atmosphere is generally less than or equal to a regulated value imposed by environmental agencies.

The MPC 102 comprises a model part, an estimator and an optimizer, each of which are disclosed in U.S. Patent No. 8,755,916. While the MPC 102 of the Figure 1 is shown to be in communication with the furnace 204 via the PIDs 104, 106 108 110 and so on, it can also be in direct communication with other parts of the power plant. For example, it can be in communication with any of the other smaller parts of the plant such as, for example, the furnace and can function to control these smaller parts of the plant.

In the embodiment depicted in the Figures 1 and 2, the MPC 102 receives inputs (X) pertaining to the amount of NOx released in the flue gas stream at the furnace exit, (Y) ammonia slip at the furnace exit and (Z) the furnace load. These inputs are also termed the controller variables or disturbance variables. The information derived from these inputs is used to supervise the functioning of the respective PIDs.

In one embodiment, the MPC 102 can include linear or nonlinear dynamic modeling and simulation derived from first principle equations such as mass, momentum, and energy balances. Furthermore, empirical modeling methods such as nonlinear neural networks are used in a hybrid dynamic model structure which combines simplified first-principle models with data-driven models. In an exemplary embodiment, the MPC leverages plant control system components, e.g., existing proportional-integral-derivative (PID) controllers, to supplement and/or replace current plant control systems with model based predictive controls having optimization capabilities. More specifically, the model part of the MPC 102 includes a nonlinear steady state model and one or more linear or nonlinear dynamic models. In addition, the steady state model and/or the dynamic model may each use adaptive, fuzzy, and/or NN modeling techniques, and/or first principle modeling techniques to model the complex, nonlinear multi-phase flows and chemical reactions of the fossil fuel fired power plant.

As stated above, the MPC 102 is in a master-slave relationship with the plurality of PIDs 104, 106, 108, 110, 112 and 114. The PIDs are slaved to the MPC 102, i.e., the MPC 102 is in a supervisory capacity with regard to the PIDs. The PIDs each comprise a control loop feedback mechanism (shown in the Figure 2) that comprises the PID controller, a pressure gauge (or a flow measurement device) and a valve that is activated by information received from the PID controller. A PID controller calculates an error value as the difference between a measured process variable and a desired setpoint. The controller attempts to minimize the error by adjusting the process through use of a manipulated variable. The PID algorithm involves three separate constant parameters, and is accordingly sometimes called three-term control: the proportional, the integral and derivative values, denoted P, I, and D. Simply put, these values can be interpreted in terms of time: P depends on the present error, I on the accumulation of past errors, and D is a prediction of future errors, based on current rate of change. The weighted sum of these three actions is used to adjust the process via a control element such as the position of a control valve, a damper, or the power supplied to a heating element.

The PID 104 receives supervisory information about the NOx set point, while the PID 106 receives supervisory information about the ammonia slip information from the same MPC 102. Control information from the PIDs 104 and 106 is then fed to the NOx reducing agent supply tank 118. PID 108 provides control information about furnace load received from the MPC 102 to the water supply tank 116 as well as to the NOx reducing agent supply tank 118. PID 110 provides pulse control information to nozzles used to introduce NOx reducing agent into the furnace, PID 112 provides oxygen set point information to the air control system (not shown), while PID 114 provides information about main burner zone (MBZ) stoichiometry. While the Figure 1 shows 6 PIDs, the MPC can provide supervisory information to 7 or more PID controllers. In an embodiment, the MPC can provide supervisory information to yet another PID that controls the windbox/furnace differential pressure (DP).

The PIDs provide the control information to valves (not shown in the Figure 1 but contained in the Figure 2) that control the ratio of water to the NOx reducing agent in the nozzle 120. The lines that carry water and the NOx reducing agent are also fitted with pressure gauges (not shown) that supply feed-back information to the PIDs.

In summary, in the Figure 1, the PIDs enable the commands of the manipulated variables generated from the MPC such as urea flow distribution bias, the total carrier water flow bias, injection height(s) of the nozzle(s), the water pulsation rate/magnitude, the NOx setpoint bias, the excess oxygen setpoint bias, the main burner zone stoichiometry setpoint bias, the windbox/furnace differential pressure (DP) setpoint bias, and the like, or a combination thereof. The MPC controls the overall constraints on the system 100 such as the outlet NOx, the ammonia slip, the reaction zone temperature distribution level(s), by taking the disturbance variables (DVs) such as furnace load demand into consideration.

As noted above, the MPC can comprise an estimator that may be used to estimate state variables such as SNCR reaction zone temperature level and distribution, SNCR reaction zone NO, NO₂ and NH₃ distributions, SNCR reaction zone O₂ level and distribution, SNCR reaction zone flow distribution and flow patterns, residence time, and the like. State variables can be estimated using either state estimator(s) based on state-space dynamic models or reverse computation engines based on, for example, computational fluid dynamics models (partial differential equations, differential algebraic equations, and the like). Physical sensor systems to measure such process state variables would be desired but may not be available immediately. Physical sensor systems that can measure a portion of the listed variables to provide initial and boundary conditions would be useful in numerical re-construction of the reaction zone distribution of the temperatures, flow parameters and flue gas species.

The Figure 2 depicts a more detailed version of the Figure 1. The Figure 2 shows additional PIDs 122 and 124 which are in electrical communication with the PIDs 104 and 106. These PIDs 122 and 124 are in electrical communication with valves that determine the amount of urea solution (the NOx reducing agent 118) that is supplied (in conjunction with water from the water supply tank 116) to the nozzles 120 in the furnace 204. The pulse control system (see Pulsing Parameters (D) and the furnace load information obtained from the MPC 102 is in electrical communication with valves that control the amount of water from the water supply tank. As can be seen in the Figure 2, the system 100 comprises a number of valves and pressure gauges that are in electrical or fluid communication with the PIDs to provide better control over the NOx reduction.

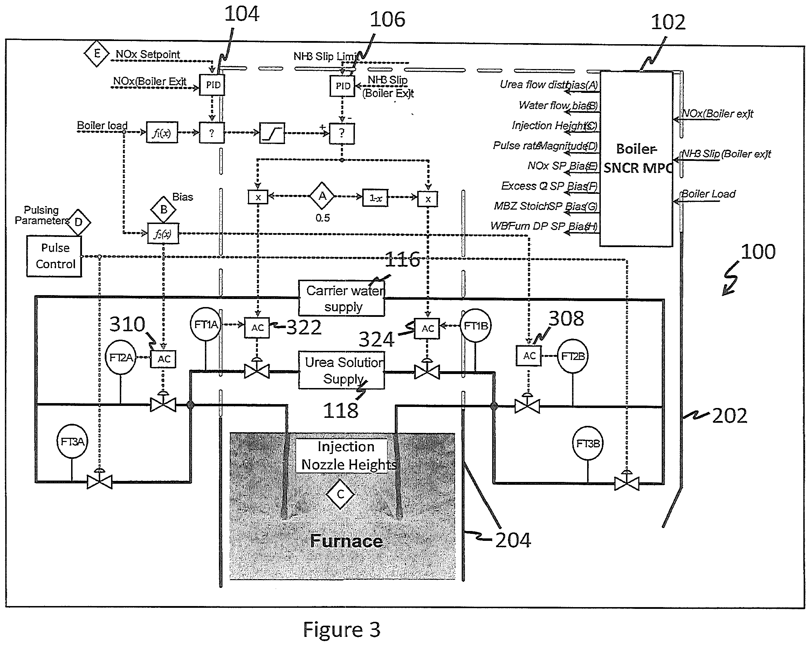

The Figure 3 shows the system 100 of the Figure 2, with some of the PIDs replaced by adaptive controllers. Comparing the Figures 2 and 3 it may be seen that the PIDs 110, 122, 124 and 108 are replaced with adaptive controllers 310, 322, 324 and 308 respectively. In general, a PID controller is essentially an error based controller that only responds when the process variable deviates from its set point. The PID controller is also a single-input-single-output (SISO) controller, which means it merely concentrates on the process variable in the control loop, and does not care about how other process variables behave in other control loops. However, complicated interactions and coupling effects do exist among certain process variables in the power plant, which cannot simply be handled by PID controllers.

The aforementioned MPC is designed to capture the features among different loops, and adjusts the associated set point values to seek the optimal operating point. The PID controllers may not be able to provide as fast response as is often desired. Instead of standard PID controllers, adaptive controllers or PID controllers with adaptive mechanisms can be introduced to improve the performance of each single control loop.

As shown in Figure 3, the adaptive controllers take the place of some of the typical PID controllers in Figure 2. An adaptive controller is a controller that can modify its behavior in response to changes in the dynamics of the process and the character of the disturbances. The adaptive controller becomes nonlinear because of the parameter adjustment mechanism. The essence of the adaptive controller is how its parameters are adjusted to meet the needs of a changing control environment. The adaptive controller includes self-tuning adaptive controls, neuro-adaptive controls, a neural network (NN), a wavelet network, or a combination thereof.

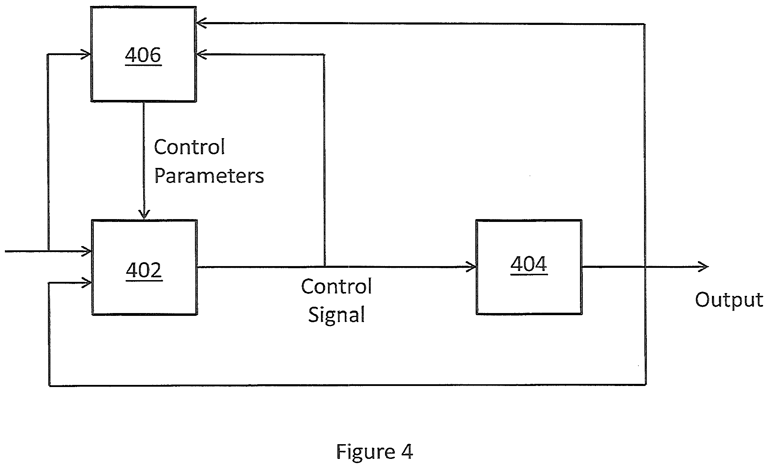

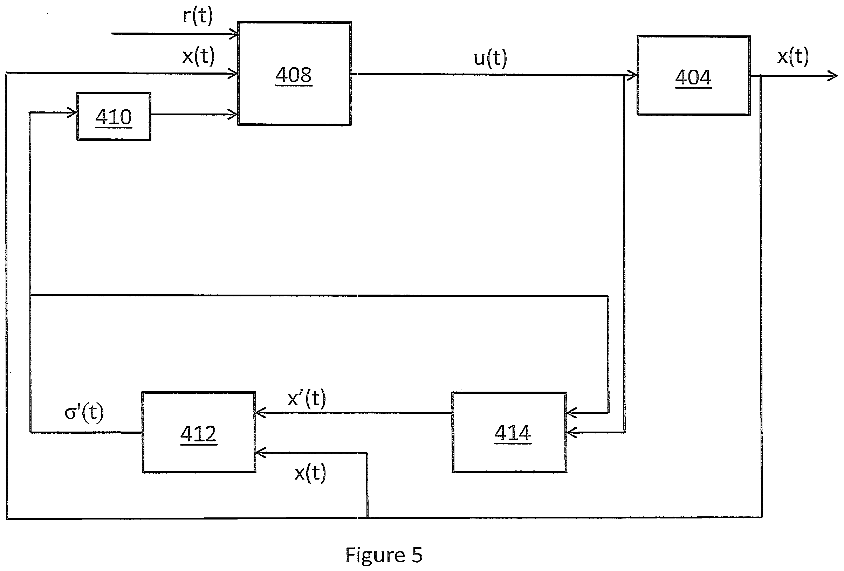

The adaptive controllers 308, 310, 322 and 324 may be used to control the feedback loops that they are associated with by two different means. These are depicted in the Figures 4 and 5 below. One method involves a parameter adjustment algorithm to update the control parameters in accordance with the operating condition as shown in the Figure 4. The advantage of this design is that the original PID controllers still remain while their parameters are updated by the parameter adjustment algorithm. Another option is to replace the PID controllers with advanced adaptive controllers, such as L1 adaptive controllers as shown in the Figure 5. In this integrated type of design, the design and implementation of adaptive algorithm and control output adjustment can be achieved at the same time. The intention of adaptive mechanism design for the SNCR process is to improve the responses of critical process variables, and to approach the control objective in a fast and stable manner.

With reference now to the Figure 4, the system 400 comprises a plant 404 that includes the furnace and a flue gas treatment system amongst other components. Output information (e.g. NOx content, ammonia slip, furnace load, and the like) from the plant is fed back via a feedback loop to a parameter adjustment module 406 and to the controller 402. In one embodiment, the plant 404, the controller 402 and the parameter adjustment model 406 are in operative communication with one another. In another embodiment, the plant 404, the controller 402 and the parameter adjustment model 406 are in electrical communication and/or fluid communication with one another. A second feedback loop also exists between the controller 402 and the parameter adjustment module 406.

The plant 404 receives operating information from a controller 402. In one embodiment, the operating information includes set point information (amongst other control parameters) either programmed directly into the controller 402 or alternatively, obtained from a MPC (not shown). As may be seen in the Figure 4, the set point information received from the controller 402 is supplemented with control parameter information received from the parameter adjustment module 406. The parameter adjustment module 406 uses a parameter adjustment algorithm to update the control parameters such as the set point in accordance with the operating conditions while the controller retains the original operating set points. The use of this mode of adaptive control is advantageous in that control information can be adjusted during plant operation (without any stoppage) to compensate for different process scenarios (e.g., differing load conditions, changes in the local regulatory environment, and the like).

The Figure 5 depicts another adaptive control scenario where the PID controllers are replaced with advanced adaptive controllers. In the Figure 5, the plant 404 is in electrical and/or fluid communication with a control law module 408, an adaptive law module 412 and a state predictor module 414. The control law module 408 is in a first feedback loop with the plant 404 and in a second feedback loop with the state predictor module 414 and with the adaptive law module 412. The adaptive law module 412 and the state predictor module 414 are in a third feedback loop with each other. The control instructions received from the adaptive law controller 412 may be filtered prior to being received by the control law module 408.

The control law module 408 provides input information u(t) to the plant 404. The input information u(t) comprises output information x(t) received from the plant 404, adaptive law σ'(t) information obtained from the adaptive law module 412 that that comprises output information x(t) and state predictor information x'(t) obtained from the state predictor module 414. The control law module 408 also receives the setpoint value r(t) as independent process information The input information u(t) received by the plant 404 from the control law module 408 is thus the sum of information received from the output information x(t), the adaptive law module information σ'(t), the state predictor information x'(t),and the setpoint value r(t). The adaptive law module information σ'(t), the state predictor information x'(t), and the setpoint value r(t) may be used to better control the process during plant operation to compensate for different process scenarios(e.g., differing load conditions, changes in the local regulatory environment, and the like).

In this integrated type of structure, the design and implementation of adaptive algorithm and control output adjustment can be simultaneously achieved. The intention of adaptive mechanism design for the SNCR process is to improve the responses of critical process variables, and to approach the control objective in a fast and stable manner.

The adaptive mechanism can be applied to the implementation of furnace-SNCR model predictive control. The motivation for this application relies on the poor performance of the initial model in the occurrence of changes in the system. For example, the model predictive control is usually deployed in cascade with the PID controllers. The tuning of the PID controllers varies the dynamics of the system and therefore the accurateness of model prediction will be affected. Manual retuning and/or model rebuilding can be expensive which constrains the performance of the MPC.

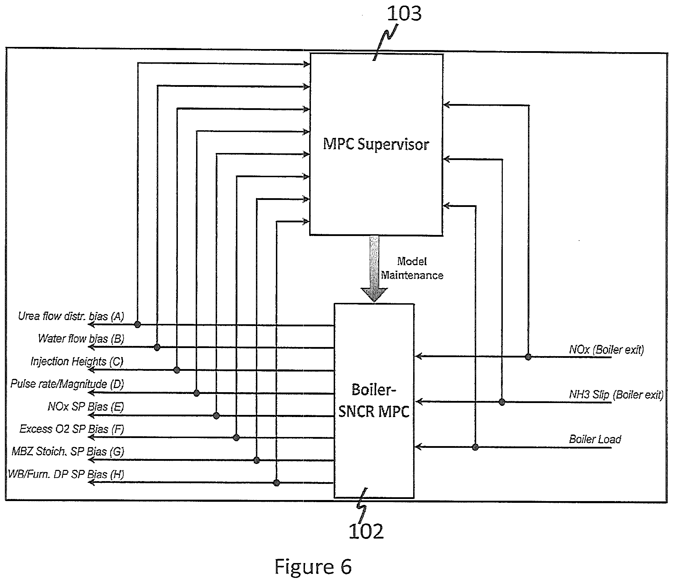

The fusion between model predictive control and adaptive mechanism is to improve the performance of a control system that comprises a MPC alone. As shown in Figure 6, the adaptive mechanism provides the performance evaluation of the model predictive control based on the current measurement, and it will become active once a difference between the model prediction and the measurement exceeding the acceptable tolerance. In the Figure 6, a model predictive control supervisor 103 is in a feedback loop with the model predictive control 102 of the Figures 1, 2 and 3. In one embodiment, the model predictive control supervisor 103 receives information pertaining to the manipulated variables and measures corresponding information pertaining to the controlled and disturbance variables. If either the information pertaining to the manipulated variables, the controlled variables or the disturbance variables varies from the set values by an excessive amount, then the model predictive control supervisor 103 recalibrates the appropriate parameters for model predictive control 102. Either the manipulated variables, the controlled variables or the disturbance variables may be reset depending upon the magnitude and direction of the variation from the set values.

The success of any model predictive control application depends on having a process model that is well matched to the control objectives. The accurateness of the process model needs to be compromised with continual model updating to ensure that the model predictive control continuously works in an acceptable range with the least amount of model updating. In terms of model maintenance, it is important to ensure that the controller does not excite high frequency dynamics that are not well modeled. The model should be as accurate as around the bandwidth of the system.

In summary, the model predictive control 102 maintenance by the model predictive control supervisor 103 provides a mechanism to adjust initial models so that they provide a better match to the process and it may also compensate for changes that may take place in the process over time by adapting the model parameters in the range of frequencies necessary to achieve a good trade-off between performance and robustness for the model predictive control controller.

As noted above, the system 100 can also employ fault tolerance mechanisms. A fault is defined as an unpermitted deviation in at least one characteristic property of a variable from an acceptable behavior or performance. Therefore, the fault is a state that may lead to a malfunction or failure of the system. The aim of a fault tolerance mechanism is to indicate undesired or impermissible process states, and to take appropriate action(s) in order to enable the system to continue its intended operation in the event of partial failure in components, possibly at a reduced level rather than to shut off the system completely.

A fault-tolerant design enables a system to continue its intended operation, possibly at a reduced level, rather than failing completely, when some part of the system fails. The term is used to describe computer systems designed to continue more or less fully operational with, perhaps, a reduction in throughput or an increase in response time in the event of some partial failure. In other words, the system as a whole (i.e., the power plant) is not stopped due to problems either in the hardware or the software.

Within the scope of an individual system, fault tolerance can be achieved by anticipating exceptional conditions and building the system to cope with them, and, in general, aiming for self-stabilization so that the system converges towards an error-free state. However, if the consequences of a system failure are catastrophic, or the cost of making it sufficiently reliable is very high, a better solution may be to use some form of duplication. In any case, if the consequence of a system failure is so catastrophic, the system is able to use reversion to fall back to a safe mode. This reversion may be a roll-back recovery that includes a human action if humans are present in the loop.

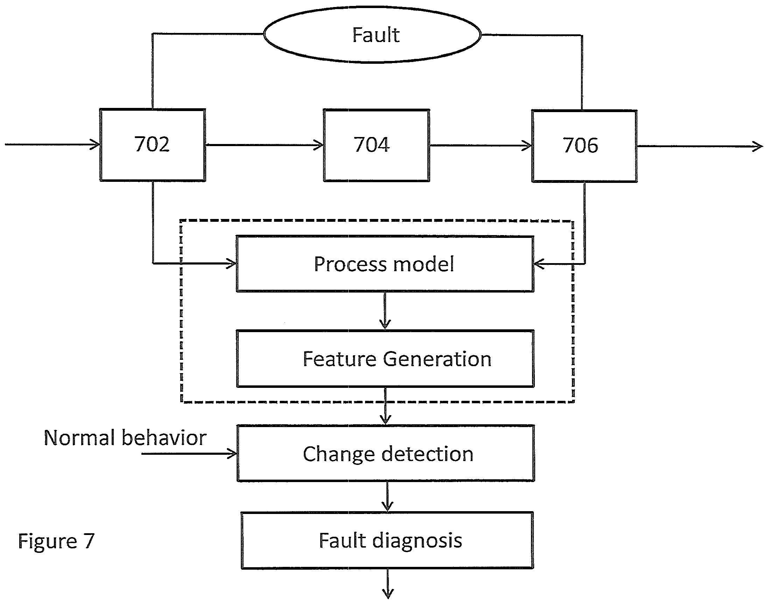

In order to ensure that the process can still be operated with a certain level of tolerance, the first step is to detect the occurrence of the fault and to determine where in the system it occurred. For example, a model based fault detection technology is to detect the process fault by using a certain type of model as shown in Figure 7. Early detection of small faults include abrupt time behavior, diagnosis of faults in the actuator, process components or sensors and detection of faults in closed loops.

Figure 7 shows the basic structure of model based fault detection. Based on the measured input U and output Y, the detection algorithm generates the residual difference between the model and the process. The diagram of the Figure 7 can apply to any actuator (such as a valve or a pump used in the power plant of the Figures 1, 2 and/or 3). In the Figure 7 and input U to an actuator 702 generates a response Y in the actuator that is either within the limits proposed by a controller (not shown) or outside these limits. This response from the actuator 702 is detected by a sensor 706. If the response lies outside proposed limits, then this response is adjudicated to be faulty and the system attempts to diagnose the reason for the fault, notably whether the fault is due to the actuator 702, the process 704 or the sensor 706. Fault detection models can be applied to any of the controllers (i.e., the MPC controller, the PID controller and/or the adaptive controllers) of the Figures 1, 2 and 3.

The input U and the output Y are also fed to a process model that generates desired features for controlling the system. This feature generation provides information to the process 704 and the sensor 706 to make determinations of whether a fault has occurred or not.

The feature generation aims to detect the model parameters and the estimated states. If the residual remains within the pre-defined tolerance, then the process can still be operated in a margin of safety. If the residual exceeds the tolerance, the system fault is detected and diagnosed to provide the instructions for further controls and/or operations.

For the control and operation of SNCR and furnace-SNCR, the (model based) fault tolerance can provide an indication of current operating status, and it is also provides supplementary solutions to the current controls in the occurrence of system faults. The deployment of this system promotes operation in a safe range over extended periods of time.

In one embodiment, the aforementioned controllers may be auto-tuned by using a particle swarm optimization (PSO) based method implemented in an optimization tuning tool. PSO is a stochastic optimization method based on the simulation of the social behavior of bird flocks or fish schools. The algorithm utilizes swarm intelligence to find the best place in the search space. The proposed auto-tuning can be conducted in two steps by design. PSO can be applied to any of the controllers (i.e., the MPC controller, the PID controller and/or the adaptive controllers) of the Figures 1, 2 and 3. It can be used to auto tune any controlling operations (i.e. control of actuators, sensors, and the like) that are performed by the aforementioned controllers.

The first step can be conducted by simulation when a dynamic model(s) is available. The second step is to perform online tuning. In the aforementioned control system designs involving the MPC and PID controllers (e.g., Figures 1, 2 and 3), tuning can be done by first tuning the PID controller then tuning the MPC controllers; and finally tuning the overall the MPC/PID control system parameters simultaneously.

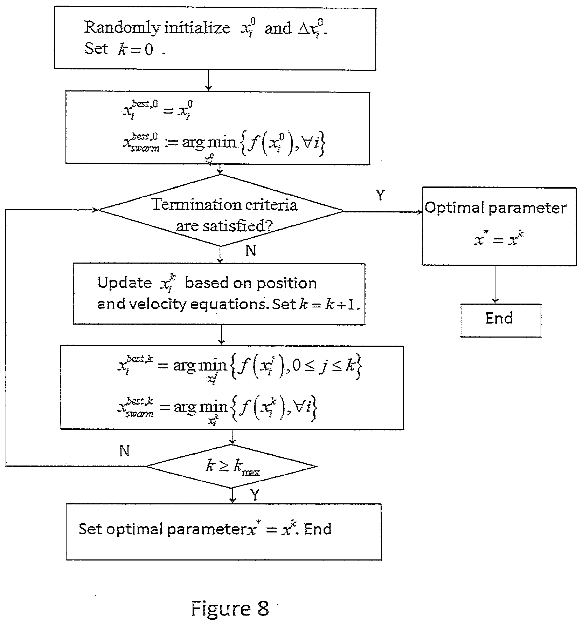

The objective functions will need to set differently for each of the three cases (where the first case involves PID controller tuning, the second case involves MPC tuning and the third case involves tuning the overall the MPC/PID control system parameters simultaneously). In the first case, for PID tuning, the optimization problem is defined to simultaneously find the best set of control parameters for each PID controller to render optimal control performance (least set point error, fastest transient time, least overshoot, and the like) for the overall regulatory PID controllers. After PID fine-tuning, the PSO-based auto-tuning algorithm will be applied to supervisory MPC control layer to optimize MPC objective weighting constants and varying prediction and control horizons. The PSO will push MPC to maximize its performance under certain system constraints. After the separate PID and MPC tuning steps, another optimization for the integrated PC-SNCR MPC/PID control design is performed to capitalize the interaction that is not captured in each of the separate tunings. The optimization objective would be modified to incorporate the overall control performance requirements and the compromise between PID and MPC tuning performance. Auto-tuning can save significant commissioning time and as a result is less expensive than other methods of control. Additionally, optimally tuned controllers can provide improved and more robust control performance. The PSO auto tuning algorithm is shown in the Figure 8.

PSO can simultaneously tune MPC and PID to achieve optimal control performance. PSO based tuning has been tested against furnace dynamic simulator and furnace combustion test facility. The PSO algorithm has the following advantages: i) its realization requires only a few lines of computer code, ii) its search technique, not being based on the gradient information, but on the values of the objective function, makes it easy to use, iii) it is computationally inexpensive, since its memory and CPU speed requirements are very low, iv) it does not require strong assumptions made in conventional deterministic methods such as linearity, differentiability, convexity, separability, or non-existence of constraints in order to solve the problem efficiently, and v) its solution does not depend on the initial states of particles, which could be a great advantage in engineering design problems based on optimization approaches.

The control system disclosed herein is advantageous in that it can be retrofitted onto existing power plants that contain other control systems. In short, it can be used in old power plants that do not have control equipment detailed herein or alternatively, can be retrofitted to power plants that have portions of the control equipment (e.g., only PID controllers) detailed herein.

The control system disclosed herein can be used to control the NOx generated in the furnace of a boiler. Boilers comprise tubed walls defining an inner space; a fuel such as coal, oil, waste is supplied into the inner space of a furnace and is combusted with an oxidizer, such as air or oxygen. During the combustion flue gas is generated that is rich in NOₓ, whose amount has to be reduced below regulated limits before the flue gas is vented into the atmosphere.

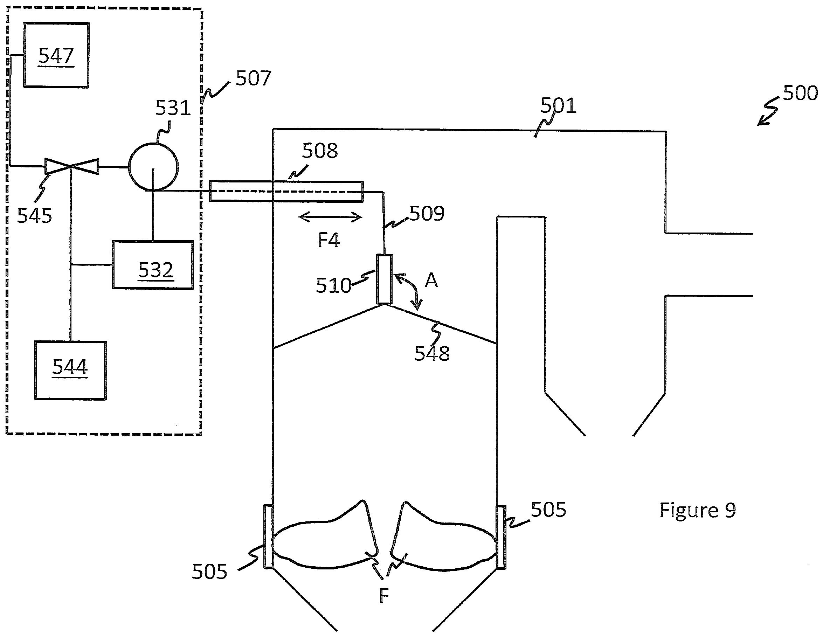

The Figure 9 depicts one exemplary embodiment of a boiler having a NOx reducing system 500 through which the NOx reducing agent is introduced into the boiler to reduce NOx emitted to the atmosphere. Various structural and operational features of the system 500 are detailed in U.S. Patent having Serial Nos. P14/350-0, P14/394-0 and P14/395-0 filed concurrently herewith. The NOx reducing system is controlled by the aforementioned control system 100 depicted in the Figures 1 - 8.

The system 500 comprises a boiler 501 comprising side tubed walls 502 enclosing an inner space 503 and a top wall 504. The boiler is supplied with fuel such as coal and an oxidizer such as air or oxygen via burners 505.

The boiler also has a device 507 for selective non catalytic reduction SNCR; the device 507 comprises a lance 508 carrying a hose 509 having at least a nozzle 510; as shown, preferably the nozzle is at the hose terminal part that is housed within the inner space 503. The device 507 further has a hose drive mechanism 511 for driving the hose within the lance 508. While the Figure 9 depicts an example of a 2-pass boiler and in this case the device 507 is associated to the first pass, it is to be noted that the boiler can be any type of boiler and the device 507 can be located anywhere, at locations where temperatures for correct selective non catalytic reaction exist. Advantageously, the lance 508 protrudes into the inner space 503 from a side tubed wall 505 of the boiler. This way the length of the hose housed within the inner space 503 is shorter than in the case where the lance is hanging from the top wall 504 of the boiler, such that the reagent passing through the hose during operation does not evaporate or at least does not undergo evaporation to a large extent before it reaches the nozzle 510. Preferably the lance 508 is located substantially horizontally in the inner space 503. The system 500 also contains a NOx reduction tank 547 that contains ammonia or urea mixed with water.

Fuel and oxidizer are supplied into the inner space 503 and the fuel is combusted generating flames F and flue gas G that passes through the boiler. The flue gas contains NOₓ (mainly NO and lower amounts of NO₂) that has to be at least partly removed. The lance 508 is introduced into the inner space 503 through a side opening of the side tubed wall 502; the opening can be an opening for different scopes, such as an inspection opening or a dedicated opening. From the lance 508 the hose 509 and the nozzle 510 hang in the inner space 503. The nozzle position can be adjusted both horizontally and vertically. The nozzle position is adjusted vertically for the nozzle 510 to inject the NOx reducing agent in zones where the temperature is the best for selective non catalytic reaction. The vertical adjustment can be done by operating the motor 532 in order to drive the wheels 531 (i.e. a pulley) for pushing/pulling the hose 509 through the lance 508. This permits the vertical position of the nozzle 510 in the space 503 to be adjusted as desired to reduce NOx emissions into the atmosphere.

Different possibilities are available for the injection of the NOx reducing agent through the nozzle 510. Preferably the reagent is injected across a conical surface 548 for example via a slot, but it can also be injected via a plurality of single jets each resting on a conical surface. Preferably the angle A between the hose 509 and the flow injected through the nozzle 510 is in the range 0° < A < 180° and more preferably it is in the range 90° < A < 180°. The cross-sectional geometry of the injection profile for the NOx reducing agent viewed from the bottom of the furnace can be circular, elliptical, square, rectangular, or polygonal (where the number of sides n = 4 or greater). Other cross-sectional geometries encompassing opposing conical sections, opposing triangles, and the like may also be used. When the cross-sectional geometry is circular, the SNCR process is referred to as an "umbrella SNCR" process.

An injection over a conical surface 48 defining an angle A between 90° - 180° is advantageous because it allows spraying the reagent over areas where the temperature is uniform. In fact, the temperature within the inner space 503 is lower close to the side tubed walls 502 and it is lower upwards (i.e. apart from the flame); therefore the isothermal curve has a bell shape with ends directed downwards and close to the tubed side walls 502. Therefore injection over a conical surface with apex at the top and directed downwards allows the reagent to intersect the flue gas having a substantially uniform or more uniform temperature than with other configurations.

The aforementioned control system 544 is in electrical and/or fluid communication with a valve 545 that is in fluid communication with the NOx reducing agent tank 547. The control system 544 is also in electrical communication with a motor 532 that is in communication with a pulley 531 that adjusts the vertical position of the nozzle 508 via the lance 508.

The aforementioned control system permits variations in the amount of the NOx reducing agent as well the reducing agent concentration in the water carrier that is admitted into the boiler space 503 by controlling the valve 545. In addition, the height of the nozzle 510 may be controlled via the motor 532 and the wheel 531.

In one embodiment, as depicted in the Figures 2 and 3, the control system controls the pulsing of the NOx reducing agent into the boiler space 503. The NOx reducing system along with the control system disclosed herein is advantageous in that it can be retrofitted onto existing power plant equipment.

While the Figure 9 depicts a NOx reducing spray nozzle 510 located along a centre line of the length of the boiler 501, there are other possible nozzle locations in the boiler that can be used for uniform and more efficient NOx removal from the flue gas stream. In one embodiment, a plurality of different nozzles located at different points in the boiler may be used to facilitate the efficient and uniform NOx absorption from the flue gas stream.

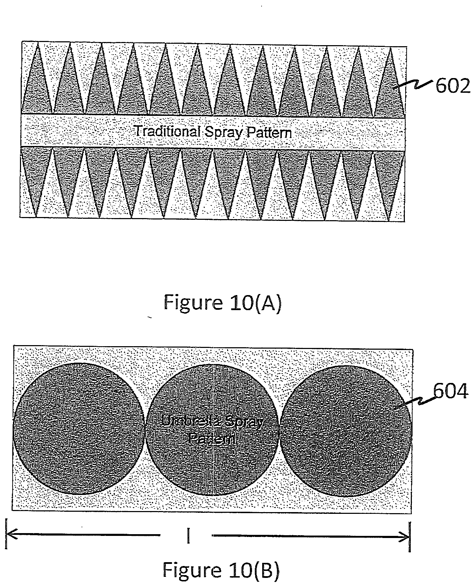

Figures 10(A) and 10(B) reflect different NOx reducing agent spray patterns (when viewed downwards from above the spray nozzle or from the top of the boiler) that are conventionally deployed in boilers. The Figure 10(A) depicts a plurality of nozzles located in the wall of the boiler, each of which puts out a NOx reducing spray that has a triangular cross-sectional area 602 when viewed from above the spray nozzle. The Figure 10(B) depicts a plurality of nozzles located along a central axis that divides the boiler in two halves along its length (1), each of which puts out a NOx reducing spray that has a circular cross-sectional area 604 when viewed from above the spray nozzle.

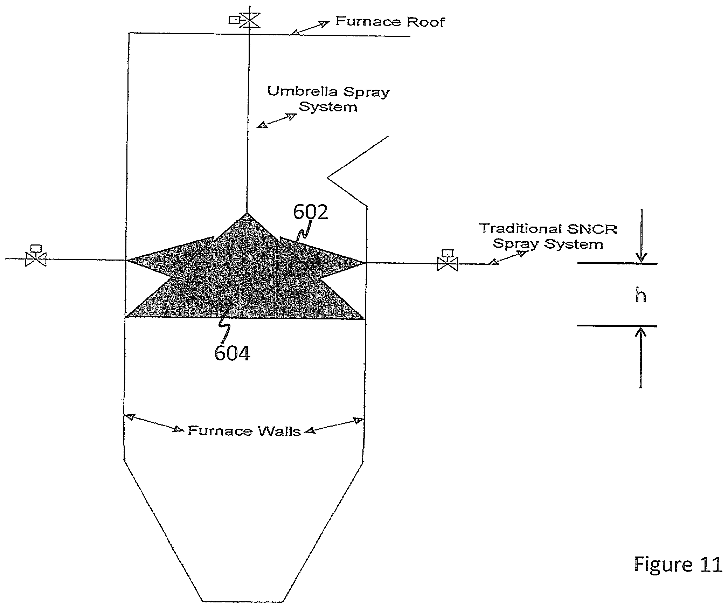

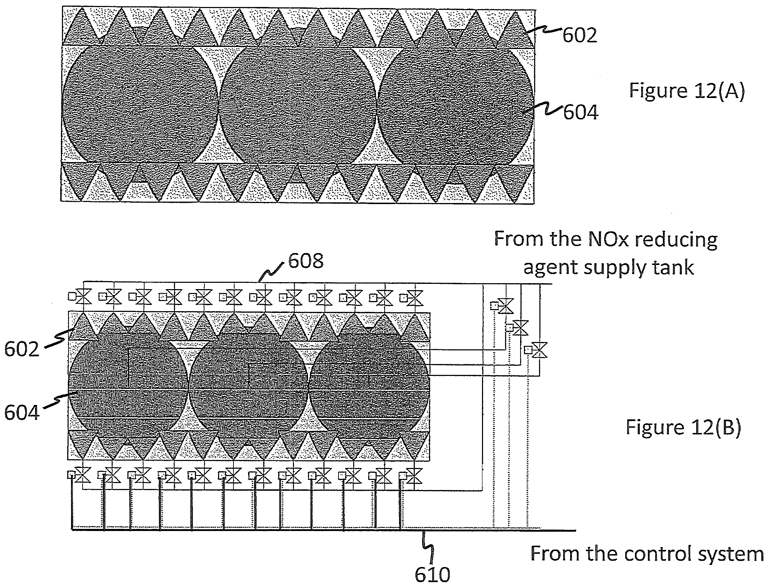

Figure 11 depicts a hybrid nozzle configuration that includes both nozzle locations - nozzles located in the walls of the furnace as well as along the centreline of the length of the furnace. The Figure 11 shows a section of a furnace having a plurality of nozzles disposed in the side walls of the furnace that provides a triangular cross-sectional area 602 when viewed from above the spray nozzle while at the same time having a plurality of nozzles located along the centreline of the length of the furnace each of which puts out a NOx reducing spray that has a circular cross-sectional area 604 when viewed from above the spray nozzle. In the Figure 12, the height "h" between the two different spray configurations may be adjusted by varying the height of the spray nozzles as detailed with respect to the Figure 9. The control system discussed above may be used to control the intensity of the sprays from different nozzles (i.e., different nozzles may spray the NOx reducing agent at different rates, different flow rates, at different pulsed frequencies, and/or at different concentrations) depending upon their locations.

The combined spray pattern when viewed from above the spray nozzles has a geometrical configuration depicted in the Figure 12(A). The combined spray pattern is a combination of triangles (resulting from the spray nozzles in the walls) and circles (resulting from the spray nozzles located along the centre line). This particular spray pattern is useful because the largest concentration of the NOx reducing agent is focussed at the centre of the boiler where the NOx concentration is greatest and the NOx reducing concentration is lower at the boiler walls where the NOx concentration is lowest. In short, this configuration permits a higher NOx reducing concentration at the centre of the boiler than that at the walls of the boiler.

The Figure 12(B) is a depiction of an exemplary schematic that shows the supply lines for control and for delivery of the NOx reducing agent to the furnace when a hybrid spray pattern is used to reduce NOx generated in the furnace. Line 608 is a fluid line that delivers the NOx reducing agent to nozzles in the wall and those along the centre line as detailed in the Figure 12(A), while line 610 is an electrical communication line that establishes contact between the valves and the control system. The control system determines the spray content, the flow rate, the frequency of the spray and the volume of the spray delivered from the nozzles at the walls as well as those at the centre line. The various spray parameters determined by the control system are based upon NOx and ammonia slip measurements made at the flue gas outlet and the subsequent supervisory commands received from the MPC supervisory controller. The flow rate to the entire system may be controlled by an overall valve 620 that can be turned on, off, or to an intermediate position as desired. While the valve 620 (or an equivalent thereof) that controls the overall flow rate of the NOx reducing agent into the furnace is not shown in the Figures 1, 2 and 3, it is also assumed to be present in these systems as well.

In an embodiment, the control system may be used to deliver one of the two sprays in a pulsed format, while the other spray is delivered continuously to the furnace. The pulse rate of the two sprays may also be varied. In an embodiment, one of the two sprays may be pulsed at a higher frequency than the other two sprays. In another embodiment, one of the two sprays may be turned off while the other functions to reduce the amount of NOx released to the atmosphere. The sprays can also be controlled to function in an alternating fashion - where the triangular sprays delivered from the nozzles in the side wall deliver spray while the umbrella spray is turned on and vice versa.

While conventional NOx removal systems (those where NOx reducing agent is delivered from nozzles in the side walls) remove 20 to 50 wt% of the NOx present in the flue gas stream, furnaces with the hybrid patterns can remove 40 to 60 wt% of the NOx present in the flue gas stream. The NOx delivery system (with nozzles in the walls and along the centreline) and the control system that produces the hybrid pattern can be retrofitted onto existing power plants. For example, if a furnace is fitted with nozzles in the sidewalls, it can be retrofitted with nozzles along the centreline or vice versa. The control system (having the MPC supervisory layer with the slaved PID/adaptive control layer as detailed above) can then be added to the NOx reducing system to enhance the NOx reduction capabilities of the power plant substantially while simultaneously increasing the efficiency of the power plant.

This control system disclosed herein is advantageous because it includes a model-based optimizing process control design for the furnace as well as for the SNCR process and uses auto-tuning (adaptive tuning) amongst other improved control mechanisms to continue to improve controls from data generated during the operation of the process. Adaptive controls and fault tolerant controls which are generally used as separate control designs are merged together to enhance the overall control performance and reliability of integrated controls of the furnace-SNCR portion of the power plant. The integration of adaptive controls with fault tolerant control and particle swarm optimization algorithms enhance the MPC designs and provide enhanced system control quality while reducing costs by employing non-catalytic NOx reduction.

It is to be noted that all ranges detailed herein include the endpoints.

While the invention has been described with reference to some embodiments, it will be understood by those skilled in the art that various changes may be made and equivalents may be substituted for elements thereof without departing from the scope of the invention. Therefore, it is intended that the invention not be limited to the particular embodiments disclosed as the best mode contemplated for carrying out this invention, but that the invention will include all embodiments falling within the scope of the appended claims.

## Claims

1. A control system (100) for NOx reduction in a power plant, the control system comprising:
a model predictive controller (102); where the model predictive controller is adapted to control overall system constraints including outlet NOx, ammonia slip, reaction zone temperature distribution level(s), furnace load demand, or a combination thereof and to generate manipulated variables including urea flow distribution, total carrier water flow, injection height(s) of nozzles, water pulsation rate/magnitude, amount of NOx, amount of excess oxygen, the main burner zone stoichiometry, windbox/furnace differential pressure, or a combination thereof;
a plurality of proportional integral differential (PID) controllers (108, 110, 122, 124) and/or adaptive controllers (308, 310, 322, 324) subordinated to and in operative communication with the model predictive controller (102), each of which being in a feedback loop with a pressure gauge or a flow measurement device and with a valve;
a NOx reduction system comprising a NOx reducing agent supply tank (118), a water supply tank (116) and lines that carry water and NOx reducing agent and that are fitted with the pressure gauge or the flow measurement device and with the valve; and
a furnace (204) for combusting a fuel; where the furnace lies downstream of the NOx reduction system and where the furnace is provided with a plurality of nozzles (120) that are in fluid communication with the NOx reduction system;
where the control system (100) is configured to determine an amount of NOx reducing agent and water introduced into the furnace (204) from the NOx reducing agent supply tank (118) and the water supply tank (116) respectively and to deliver intermittently NOx reducing agent and water to the furnace (204).

2. The control system of Claim 1, where the model predictive controller (102) employs fault tolerance logic.

3. The control system of Claim 1, where the adaptive controller (308, 310, 322, 324) modifies system behavior based on dynamic process changes during operation of the furnace (204).

4. The control system of Claim 1, where the model predictive controller (102) comprises an estimator that estimates state variables; where the state variables are SNCR reaction zone temperature level and distribution, SNCR reaction zone NO, NO₂ and NH₃ distributions, SNCR reaction zone O₂ level and distribution, SNCR reaction zone flow distribution, residence time and flow patterns.

5. The control system of Claim 1, where the adaptive controller (308, 310, 322, 324) employs a parameter adjustment algorithm to update the control parameters in accordance with operating conditions.

6. The control system of Claim 1, where the adaptive controller (308, 310, 322, 324) is an advanced adaptive controller and where the advanced adaptive controller comprises a control law module (408), an adaptive law module (412) and a state predictor module (414).

7. The control system of Claim 1, where the adaptive controller (308, 310, 322, 324) includes self-tuning adaptive controls, neuro-adaptive controls, a neural network (NN), a wavelet network, or a combination thereof.

8. The control system of Claim 1, further comprising a model predictive controller supervisor (103) that employs an adaptive mechanism that provides a performance evaluation of the model predictive controller based (102) on a current measurement; where the model predictive controller supervisor (103) activates the adaptive mechanism once a difference between a model prediction and a measurement exceeding the acceptable tolerance of the model prediction is discovered.

9. The control system of Claim 1, where the control system (100) uses an optimization module to effect automatic tuning of the model predictive controller (102).

10. The control system of Claim 1, where the optimization module comprises a particle swarm optimization algorithm.

11. The control system of Claim 1, where the NOx reducing agent and water are introduced into the furnace (204) via the plurality of nozzles (120) located in a sidewall and a roof of the furnace.

12. The control system of Claim 11, where a height of the nozzle (120) is varied based on control information received from the model predictive controller (102).

13. The control system of Claim 11, where a cross sectional geometry of a NOx reduction spray when viewed from above the nozzles (120) is a combination of triangles and circles.

14. A method of reducing NOx in a power plant comprising:
feeding information from a furnace (204) to a model predictive controller (102); where the information is at least one of outlet NOx, ammonia slip, reaction zone temperature distribution level(s), furnace load demand, or a combination thereof;
providing control information from the model predictive controller (102) to a plurality of proportional integral differential (PID) controllers (108, 110, 122, 124) and/or adaptive controllers (308, 310, 322, 324); where the control information is at least one of urea flow distribution bias, total carrier water flow bias, injection height(s) of nozzles, water pulsation rate/magnitude, NOx setpoint bias, excess oxygen setpoint bias, the main burner zone stoichiometry setpoint bias, windbox/furnace differential pressure setpoint bias, or a combination thereof; where each of the plurality of PID and/or adaptive controllers is in a feedback loop with a pressure gauge or a flow measurement device and with a valve; where water and NOx reducing agent carrying lines of a NOx reduction system are fitted with the pressure gauge or the flow measurement device and with the valve; and where the NOx reduction system is in fluid communication with the furnace (204) and further comprises a NOx reducing agent supply tank (118) and a water supply tank (116; and
using the control information to determine an amount of NOx reducing agent and water from the NOx reducing agent supply tank (118) and the water supply tank (116) respectively and to deliver the determined amounts of NOx reducing agent and water intermittently to the furnace (204).

## Patentansprüche

1. Steuerungssystem (100) zur NOx-Reduktion in einem Kraftwerk, wobei das Steuerungssystem umfasst:
eine modellprädiktive Steuereinheit (102); wobei die modellprädiktive Steuereinheit ausgelegt ist, Gesamtsystembeschränkungen zu steuern, einschließlich Auslass-NOx, Ammoniakschlupf, Reaktionszonentemperaturverteilungsniveau(s), Ofenlastbedarf oder einer Kombination davon, und um manipulierte Variablen zu erzeugen, einschließlich Harnstoffströmungsverteilung, Gesamtträgerwasserströmung, Einspritzhöhe(n) von Düsen, Wasserpulsationsrate/-größenordnung, NOx-Menge, Menge an überschüssigem Sauerstoff, Stöchiometrie der Hauptbrennerzone, Brennerluftkasten/Ofen-Differenzdruck oder einer Kombination davon;
eine Vielzahl von Proportional-Integral-Differential-Steuereinheiten (PID-Steuereinheiten) (108, 110, 122, 124) und/oder adaptiven Steuereinheiten (308, 310, 322, 324), die der modellprädiktiven Steuereinheit (102) untergeordnet sind und mit dieser in Wirkverbindung stehen, wobei sich jede davon in einer Rückkopplungsschleife mit einem Druckmesser oder einer Durchflussmessvorrichtung und mit einem Ventil befindet;
ein NOx-Reduktionssystem, umfassend einen NOx-Reduktionsmittelversorgungstank (118), einen Wasserversorgungstank (116) und Leitungen, die Wasser und NOx-Reduktionsmittel transportieren und die mit dem Druckmesser oder der Durchflussmessvorrichtung und mit dem Ventil ausgestattet sind; und
einen Ofen (204) zum Verbrennen eines Brennstoffs; wobei der Ofen in Strömungsrichtung nach dem NOx-Reduktionssystems liegt und wobei der Ofen mit einer Vielzahl von Düsen (120) versehen ist, die in Fluidverbindung mit dem NOx-Reduktionssystem stehen;
wobei das Steuerungssystem (100) konfiguriert ist, eine Menge an NOx-Reduktionsmittel und Wasser zu ermitteln, die vom NOx-Reduktionsmittelversorgungstank (118) bzw. vom Wasserversorgungstank (116) in den Ofen (204) eingeleitet werden, und intermittierend NOx-Reduktionsmittel und Wasser an den Ofen (204) abzugeben.

2. Steuerungssystem nach Anspruch 1, wobei die modellprädiktive Steuereinheit (102) eine Fehlertoleranzlogik nutzt.

3. Steuerungssystem nach Anspruch 1, wobei die adaptive Steuereinheit (308, 310, 322, 324) das Systemverhalten auf der Grundlage dynamischer Prozessänderungen während des Betriebs des Ofens (204) modifiziert.

4. Steuerungssystem nach Anspruch 1, wobei die modellprädiktive Steuereinheit (102) eine Schätzeinheit umfasst, die Zustandsvariablen schätzt; wobei die Zustandsvariablen Niveau und Verteilung von SNCR-Reaktionszonentemperaturen, Verteilungen von SNCR-Reaktionszonen-NO, -NO₂ und -NH₃, Niveau und Verteilung von SNCR-Reaktionszonen-O₂, Strömungsverteilung, Verweilzeit und Strömungsmuster in der SNCR-Reaktionszone sind.

5. Steuerungssystem nach Anspruch 1, wobei die adaptive Steuereinheit (308, 310, 322, 324) einen Parameteranpassungsalgorithmus nutzt, um die Steuerungsparameter gemäß Betriebsbedingungen zu aktualisieren.

6. Steuerungssystem nach Anspruch 1, wobei die adaptive Steuereinheit (308, 310, 322, 324) eine erweiterte adaptive Steuereinheit ist und wobei die erweiterte adaptive Steuereinheit ein Steuerungsgesetzmodul (408), ein adaptives Gesetzmodul (412) und ein Zustandsprädiktormodul (414) umfasst.

7. Steuerungssystem nach Anspruch 1, wobei die adaptive Steuereinheit (308, 310, 322, 324) selbstabstimmende adaptive Steuerelemente, neuroadaptive Steuerelemente, ein neuronales Netz (NN), ein Wavelet-Netz oder eine Kombination davon aufweist.

8. Steuerungssystem nach Anspruch 1, ferner umfassend eine Überwachungseinheit (103) für modellprädiktive Steuereinheiten, die einen adaptiven Mechanismus nutzt, der auf der Grundlage einer aktuellen Messung eine Leistungsbewertung der modellprädiktiven Steuereinheit (102) bereitstellt; wobei die Überwachungseinheit (103) für modellprädiktive Steuereinheiten den adaptiven Mechanismus aktiviert, sobald eine Differenz zwischen einer Modellprädiktion und einer Messung festgestellt wird, die die zulässige Toleranz der Modellprädiktion überschreitet.

9. Steuerungssystem nach Anspruch 1, wobei das Steuerungssystem (100) ein Optimierungsmodul verwendet, um eine automatische Abstimmung der modellprädiktiven Steuereinheit (102) zu bewirken.

10. Steuerungssystem nach Anspruch 1, wobei das Optimierungsmodul einen Partikelschwarmoptimierungsalgorithmus umfasst.

11. Steuerungssystem nach Anspruch 1, wobei das NOx-Reduktionsmittel und Wasser über die Vielzahl von Düsen (120) in den Ofen (204) eingeleitet werden, die sich in einer Seitenwand und einem Dach des Ofens befinden.

12. Steuerungssystem nach Anspruch 11, wobei eine Höhe der Düse (120) auf der Grundlage von Steuerungsinformationen variiert wird, die von der modellprädiktiven Steuereinheit (102) empfangen werden.

13. Steuerungssystem nach Anspruch 11, wobei eine Querschnittsgeometrie eines NOx-Reduktionssprühstrahls bei Betrachtung von oberhalb der Düsen (120) eine Kombination aus Dreiecken und Kreisen ist.

14. Verfahren zum Reduzieren von NOx in einem Kraftwerk, umfassend:
Zuführen von Informationen von einem Ofen (204) zu einer modellprädiktiven Steuereinheit (102); wobei die Informationen mindestens eines aus Auslass-NOx, Ammoniakschlupf, Reaktionszonentemperaturverteilungsniveau(s), Ofenlastbedarf oder eine Kombination davon sind;
Bereitstellen von Steuerungsinformationen aus der modellprädiktiven Steuereinheit (102) für eine Vielzahl von Proportional-Integral-Differential-Steuereinheiten (PID-Steuereinheiten) (108, 110, 122, 124) und/oder adaptiven Steuereinheiten (308, 310, 322, 324); wobei die Steuerungsinformationen mindestens eines aus Harnstoffströmungsverteilungsabweichung, Gesamtträgerwasserströmungsabweichung, Einspritzhöhe(n) von Düsen, Wasserpulsationsrate/-größenordnung, NOx-Sollwertabweichung, Sauerstoffüberschuss-Sollwertabweichung, Hauptbrennerzonenstöchiometrie-Sollwertabweichung, Brennerluftkasten-/Ofendifferenzdruck-Sollwertabweichung oder einer Kombination davon sind; wobei sich jede der Vielzahl von PID-Steuereinheiten und/oder adaptiven Steuereinheiten in einer Rückkopplungsschleife mit einem Druckmesser oder einer Durchflussmessvorrichtung und mit einem Ventil befindet; wobei Wasser und NOx-Reduktionsmittel transportierende Leitungen eines NOx-Reduktionssystems mit dem Druckmesser oder der Durchflussmessvorrichtung und mit dem Ventil ausgestattet sind; und wobei das NOx-Reduktionssystem in Fluidverbindung mit dem Ofen (204) steht und ferner einen NOx-Reduktionsmittelversorgungstank (118) und einen Wasserversorgungstank (116) umfasst; und
Verwenden der Steuerungsinformationen, um eine Menge an NOx-Reduktionsmittel und Wasser aus dem NOx-Reduktionsmittelversorgungstank (118) bzw. dem Wasserversorgungstank (116) zu ermitteln und die ermittelten Mengen an NOx-Reduktionsmittel und Wasser intermittierend an den Ofen (204) abzugeben.

## Revendications

1. Système de commande (100) pour la réduction de NOx dans une centrale électrique, le système de commande comprenant :
un contrôleur prédictif de modèle (102) ; où le contrôleur prédictif de modèle est conçu pour commander des contraintes globales de système incluant NOx de sortie, rejet d'ammoniac, niveau(x) de distribution de température de zone de réaction, demande de charge de four, ou une combinaison de ceux-ci et pour générer des variables manipulées incluant distribution de flux d'urée, débit total d'eau porteuse, hauteur(s) d'injection des buses, cadence/intensité de pulsation d'eau, quantité de NOx, quantité d'oxygène en excès, la stœchiométrie de zone de brûleur principal, pression différentielle boîte à vent/four, ou une combinaison de ceux-ci ;
une pluralité de contrôleurs différentiels proportionnels intégraux (PID) (108, 110, 122, 124) et/ou de contrôleurs adaptatifs (308, 310, 322, 324) subordonnés à et en communication opérationnelle avec le contrôleur prédictif de modèle (102), dont chacun est dans une boucle de rétroaction avec un manomètre ou un dispositif de mesure de débit et avec une vanne ;
un système de réduction de NOx comprenant un réservoir d'alimentation en agent réducteur de NOx (118), un réservoir d'alimentation en eau (116) et des lignes qui transportent l'eau et l'agent réducteur de NOx et qui sont équipées du manomètre ou du dispositif de mesure de débit et de la vanne ; et
un four (204) pour brûler un combustible ; où le four se trouve en aval du système de réduction de NOx et où le four est pourvu d'une pluralité de buses (120) qui sont en communication fluidique avec le système de réduction de NOx ;
où le système de commande (100) est configuré pour déterminer une quantité d'agent réducteur de NOx et d'eau introduite dans le four (204) à partir du réservoir d'alimentation en agent réducteur de NOx (118) et du réservoir d'alimentation en eau (116) respectivement et pour acheminer de façon intermittente l'agent réducteur de NOx et l'eau vers le four (204).

2. Système de commande selon la revendication 1, où le contrôleur prédictif de modèle (102) fait appel à une logique de tolérance aux pannes.

3. Système de commande selon la revendication 1, où le contrôleur adaptatif (308, 310, 322, 324) modifie le comportement du système sur la base de changements dynamiques de processus pendant le fonctionnement du four (204).

4. Système de commande selon la revendication 1, où le contrôleur prédictif de modèle (102) comprend un dispositif d'estimation qui estime des variables d'état ; où les variables d'état sont le niveau et la distribution de température de zone de réaction SNCR, le NO de zone de réaction SNCR, les distributions de NO₂ et de NH₃, le niveau et la distribution de O₂ de zone de réaction SNCR, la distribution d'écoulement de zone de réaction SNCR, le temps de séjour et les schémas d'écoulement.

5. Système de commande selon la revendication 1, où le contrôleur adaptatif (308, 310, 322, 324) fait appel à un algorithme d'ajustement de paramètre pour mettre à jour les paramètres de commande conformément aux conditions de fonctionnement.

6. Système de commande selon la revendication 1, où le contrôleur adaptatif (308, 310, 322, 324) est un contrôleur adaptatif évolué et où le contrôleur adaptatif évolué comprend un module légal de commande (408), un module légal adaptatif (412) et un module de prévision d'état (414).

7. Système de commande selon la revendication 1, où le contrôleur adaptatif (308, 310, 322, 324) comprend des commandes adaptatives à autoréglage, des commandes neuro-adaptatives, un réseau neuronal (NN), un réseau d'ondelettes, ou une combinaison de ceux-ci.

8. Système de commande selon la revendication 1, comprenant en outre un superviseur de contrôleur prédictif de modèle (103) qui fait appel à un mécanisme adaptatif qui fournit une évaluation de performance du contrôleur prédictif de modèle sur la base (102) d'une mesure de courant ; où le superviseur de contrôleur prédictif de modèle (103) active le mécanisme adaptatif une fois qu'une différence entre une prévision de modèle et une mesure dépassant la tolérance acceptable de la prévision de modèle est découverte.

9. Système de commande selon la revendication 1, où le système de commande (100) utilise un module d'optimisation pour réaliser une syntonisation automatique du contrôleur prédictif de modèle (102).

10. Système de commande selon la revendication 1, où le module d'optimisation comprend un algorithme d'optimisation à essaim particulaire.

11. Système de commande selon la revendication 1, où l'agent réducteur de NOx et l'eau sont introduits dans le four (204) par l'intermédiaire de la pluralité de buses (120) situées dans une paroi latérale et un toit du four.

12. Système de commande selon la revendication 11, où une hauteur de la buse (120) est variée sur la base d'informations de commande reçues du contrôleur prédictif de modèle (102).

13. Système de commande selon la revendication 11, où une géométrie en coupe d'une pulvérisation de réduction de NOx lorsqu'on observe depuis le dessus des buses (120) est une combinaison de triangles et de cercle.

14. Procédé de réduction de NOx dans une centrale électrique comprenant :
l'alimentation d'informations provenant d'un four (204) vers un contrôleur prédictif de modèle (102) ; où les informations sont au moins l'un parmi NOx de sortie, rejet d'ammoniac, distribution(s) de température de zone de réaction, demande de charge de four, ou une combinaison de ceux-ci ;
la fourniture d'informations de commande à partir du contrôleur prédictif de modèle (102) vers une pluralité de contrôleurs différentiels proportionnels intégraux (PID) (108, 110, 122, 124) et/ou de contrôleurs adaptatifs (308, 310, 322, 324) ; où les informations de commande sont au moins l'un parmi un biais de distribution de flux d'urée, un biais de débit total d'eau porteuse, la ou les hauteur(s) d'injection des buses, la cadence/intensité de pulsation d'eau, un biais de point de consigne de NOx, un biais de point de consigne d'excès d'oxygène, le biais de point de consigne de stœchiométrie de zone de brûleur principal, un biais de point de consigne de pression différentielle boîte à vent/four, ou une combinaison de ceux-ci ; où chacun parmi la pluralité de contrôleurs PID et/ou adaptatifs est dans une boucle de rétroaction avec un manomètre ou un dispositif de mesure de débit et avec une vanne ; où des lignes transportant de l'eau et un agent réducteur de NOx d'un système de réduction de NOx sont équipées du manomètre ou du dispositif de mesure de débit et de la vanne ; et où le système de réduction de NOx est en communication fluidique avec le four (204) et comprend en outre un réservoir d'alimentation en agent réducteur de NOx (118) et un réservoir d'alimentation en eau (116 ; et
l'utilisation des informations de commande pour déterminer une quantité d'agent réducteur de NOx et d'eau provenant du réservoir d'alimentation en agent réducteur de NOx (118) et du réservoir d'alimentation en eau (116) respectivement et pour acheminer les quantités déterminées d'agent réducteur de NOx et d'eau de façon intermittente vers le four (204).
